# EUROPEAN PATENT APPLICATION

(11) **EP 4 554 030 A1**
(43) Date of publication of application: **14.05.2025**
(21) Application number: 23209101.7
(22) Date of filing: 10.11.2023
(51) Int. Cl.: H02J 3/14, F25B 49/02

(54) **HEAT PUMP POWER MODULATION WITH GRID FLUCTUATIONS**

(71) Applicant: BDR Thermea Group B.V., 7332 BD Apeldoorn (NL)
(72) Inventor: Scholler, Daniel, 7332 BD Apeldoorn (NL)
(74) Representative: Grabovac, Dalibor

(57) **Abstract**

The present invention relates generally to heat pump systems enabled with inverter technology. More specifically, the invention pertains to the control logic of these systems, enabling them to adjust their power consumption in response to fluctuations in the electricity grid's frequency and voltage which relate the indication of the grid overload.

## Description

The present invention relates generally to heat pump systems enabled with inverter technology. More specifically, the invention pertains to the control logic of these systems, enabling them to adjust their power consumption in response to fluctuations in the electricity grid's frequency and/or voltage which relate the indication of the grid overload.

Heat pumps are devices that transfer heat energy from a source to a destination, usually operating on electricity. They are commonly used for space heating and cooling, and water heating. One way of defining heat pump systems can be depending on the type of source and destination medium for the heat transfer. The most common destination mediums are air and water, for heating means or for domestic hot water application. In the following document, heat pump system can for example refers to air-source or water-source heat pump water heater, for heating domestic water, or ground source heat pump or air source heat pump for heating and/or cooling a destination medium. The destination medium can refer to air or water. Modern heat pumps are often designed with inverter technology, which adjusts the compressor speed in response to the heating or cooling demand, thus improving the system's efficiency and longevity. An essential component of these systems is the electronic control unit, responsible for managing various operations, including power modulation.

The overall production and consumption of electrical energy on the grid is tending to change. Electricity consumption is increasing due to the growing number of electrical appliances and the higher average consumption of each of these appliances. An example of this is the replacement of oil or gas heating systems with heating systems that use electricity, such as electric heaters or heat pumps. Another example is the massive increase of electrical vehicles.

In addition, electricity production is tending to evolve due to the fact that the means of production change in order to reduce their ecological footprint. Part of the historical solutions used gas, coal, and fuel oil. Some of these production methods are being replaced by renewable energy production methods such as solar panels or wind turbines. This type of generation is therefore more environmentally friendly but has the disadvantage of being less easy to control. We are therefore moving from on-demand production to production that depends on external conditions (wind, sunshine, etc.).

The combination of increased consumption and less flexible control of generation resources is leading to an increase in the risk of drift and overloading of the electricity network. To compensate for this, electricity network management operators are used to adjust the voltage and frequency of the electricity network slightly to bring demand into line with production. By lowering the frequency and/or voltage of the network, less energy is consumed while the products remain operational. It also prevents a blackout from occurring.

Contemporary heat pump systems with inverter technology automatically compensate for any loss of power, thus making them insensitive to network overloads. However, this automatic compensation can have a long-term impact on the reliability and lifespan of components. Moreover, this compensation is only effective and reasonable when deviations from the nominal frequency and/or voltage are limited. In the event of major deviations, compensation may not operate automatically or may render the product non-functional. In addition, it would be reasonable to reduce the power consumption impact of heat pumps in operation on this grid overload.

This would help to reduce overloading, stabilize the electrical network and reduce the risk of blackouts. Current existing solutions do not offer a control logic for managing unexpected grid overloads, nor manage deviations of the frequency and/or voltage of the electric supply, nor do they directly control the power consumed by the heat pump system to respond to such overload.

The object of the present invention is to provide an improved control logic for heat pump systems enabling to reduce the power consumed by heat pumps when the power network is overloaded and thus that can measure the real-time voltage and/or frequency of the electricity grid and calculate any deviations from the nominal values. Alternatively, the measurement of the real-time voltage and/or frequency of the electricity can be done by the electricity transmission system operator and then forecast to the heat pump system to allow it to calculate any deviations from the nominal values.

Alternatively, the measurement of the real-time voltage and/or frequency of the electricity and calculation of any deviations from the nominal values can be done by the electricity transmission system operator and then forecast these deviation values to the heat pump system.

Based on these calculations, the heat pump system can effectively modulate the power consumption of the heat pump to avoid any imminent blackouts due to grid overloads. The invention aims to offer a solution that not only compensate low deviation but also adjust the power consumption of the product in order to be able to have a larger tolerance to deviation and improves the electric system's reliability and user experience.

The object of the invention is achieved by providing an electrically powered heat pump system comprising a variable speed compressor, a control unit configured to respond to power grid frequency and/or voltage deviations, and a power modulation mechanism configured to adjust the power of the compressor and/or an electrical backup heater, based on the deviations.

The system integrates a variable speed compressor, a control unit, and a mechanism that can modulate the power based on real-time measurements of grid's voltage and/or frequency deviations.. When the grid shows signs of impending overload, the control unit instructs the heat pump to reduce its power consumption, thus preventing potential blackouts or outages.

In an embodiment, the control unit of the heat pump system is configured to measure and respond to grid frequency and/or voltage deviations. The system need to have the ability to measure itself the grid frequency and/or voltage deviations when the measurements of the real-time voltage and/or frequency of the electricity are not provided to the heat pump system by the electricity transmission system operator.

In an embodiment, the power modulation mechanism of the heat pump system is configured to proportionally reduce the power of the compressor and/or the electrical backup heater in response to the grid frequency and/or voltage deviations. The power modulation mechanism is designed to respond proportionately to any deviations in the grid's frequency and/or voltage. In scenarios where a grid overload leads to a decrease in frequency and/or voltage, the heat pump's power is instructed to drop in proportion to this deviation, thus ensuring that the response is calibrated and effective.

In an embodiment, the power modulation mechanism of the heat pump system is configured to reduce the power of the compressor and/or the electrical backup heater according to an affine function of the grid frequency and/or the grid voltage deviations. The power modulation can be based on various mathematical models, with one approach being the affine function. This function is one of the ways the control unit calculates the power reduction needed, given the fluctuations in the grid's frequency and/ or voltage.

In an embodiment, the power modulation mechanism of the heat pump system is configured to reduce the power of the compressor and/or the electrical backup heater according to a polynomial or parabolic function of the grid frequency and/or the grid voltage deviations. Another mathematical model utilized for the power modulation is the polynomial or parabolic function. It offers an alternative approach for deducing the power modulation necessary to counteract any deviations in the grid's frequency or voltage.

Additionally, the power modulation mechanism of the heat pump system may be configured to reduce the power of the compressor and/or the electrical backup heater according to a first function of the grid frequency and/or the grid voltage deviations and then according to a second function above a pre-defined value of Delta F or Delta P.

In an embodiment, the heat pump system is provided, wherein the power modulation mechanism reduces the power of the compressor and/or the electrical backup heater according to the equation Delta P = f(Delta P_{F}, Delta Pv), or Delta P = Delta P_{F}, or Delta P = Delta Pv, where Delta P represents the power reduction, f represents a function, Delta P_{F} represents the power reduction resulting to the frequency deviation, and Delta Pv represents the power reduction resulting to the voltage deviation. This enables to proportionally adjust the heat pump's power based on deviations in either the grid's frequency and/or voltage. This power modulation is determined using the function f, which, when applied to the power reduction resulting to the frequency deviation (Delta P_{F}) and/or the power reduction resulting to the voltage deviation (Delta P_{V}) , gives the necessary power reduction (Delta P). This allows for a controlled response to grid overloads rather than arbitrary adjustments.

In an embodiment, the power reduction resulting to the frequency deviation Delta P_{F} is given by the equation Delta P_{F}= g(Delta F) and the power reduction resulting to the voltage deviation Delta Pv is given by the equation Delta Pv= h(Delta V), g represents a function, h represents a function.

In an embodiment, the function f may be equal to the maximum of (Delta P_{F}, Delta Pv). Preferably, the function f is the maximum of (Delta P_{F}, Delta P_{V}). Defining f as the maximum of (Delta P_{F}, Delta Pv) allows to make sure that the power reduction applied always covers the worst case.

In an embodiment, the function g and h may be an affine, parabolic, or polynomial function.

In an embodiment, the heat pump system is provided, wherein the control unit is configured to initiate power reduction resulting to the frequency deviation Delta P_{F} in response to a grid frequency deviation that exceeds 0.01 Hz, preferably 0.2 Hz. The control unit has set thresholds to decide when a power reduction should be initiated. If the grid frequency deviation surpasses 0.01 Hz and optimally reaches 0.2 Hz, the control unit starts the process of reducing the power of the heat pump, thereby contributing to the grid stability.

In an embodiment, the heat pump system is provided, wherein the control unit is configured to initiate power reduction resulting to the voltage deviation Delta Pv in response to a grid voltage deviation that exceeds 10V, preferably 11.5V. Similar to the frequency deviation, the control unit also monitors voltage deviations. When a deviation exceeds a threshold of 10V, and more optimally 11.5V, the control unit responds by initiating a power reduction, safeguarding against grid overloads.

Advantageously, the control unit of the heat pump system is configured to initiate power reduction resulting to the voltage deviation Delta Pv in response to a grid voltage deviation that exceeds 5% of the voltage nominal value.

In an embodiment, the heat pump system is provided, wherein the control unit is configured to calculate the grid frequency deviation and/or grid voltage deviation using nominal and measured values of the grid frequency and/or grid voltage respectively. To accurately compute the deviations in frequency or voltage, the control unit uses both the nominal (standard) values and the real-time values measured by the transducer. This ensures that the calculated deviations are precise and representative of the actual conditions.

Additionally, the heat pump system may further comprise a voltage-frequency transducer configured to measure the grid frequency and/or grid voltage. This specialized device is responsible for the real-time monitoring and measurement of the grid's frequency and/or voltage. For instance, a transducer which provides data via Modbus over Transmission Control Protocol can be used. The voltage-frequency transducer may be integrated within the control unit of the heat pump system or may be external to the heat pump system. The flexibility of the design allows for the voltage-frequency transducer to either be an integral part of the control unit or be positioned externally.

Additionally, the heat pump system may further comprise a data converter configured to facilitate communication between the voltage-frequency transducer and the control unit, wherein the data converter can be integrated within the control unit or placed externally between the transducer and the control unit. Communication between the voltage-frequency transducer and the control unit is facilitated by a data converter. This converter ensures that data from the transducer is in a format compatible with the control unit. Depending on the design requirements, this data converter can either be integrated within the control unit or be an external intermediary between the transducer and the control unit. For instance, the data converter may be configured to convert measurements of grid frequency and/or voltage from a network Transmission Control Protocol (TCP) format to a format compatible with a communication bus of the control unit. The data converter plays a pivotal role in ensuring that measurements from the transducer, are converted into a format that the control unit's communication bus can understand. This ensures seamless communication and real-time action based on accurate data.

Advantageously, the heat pump system comprises a voltage-frequency transducer and a data converter both integrated within the control unit. The control unit may be situated inside or outside the heat pump unit of the heat pump system.

In an embodiment, the heat pump system is provided, wherein the control unit is configured to limit or delay the reduction of the power of the compressor and/or the electrical backup heater in case of defrosting or when a minimum threshold of ambient temperature, measured inside, is reached. The system understands that there are situations where power reduction might not be ideal. One such scenario is during the defrosting phase. In such cases, the control unit is configured to either limit the power reduction or delay it entirely to ensure that the defrosting process is not adversely affected. Another situation that warrants an exception to power reduction is when the ambient temperature inside the building to heat reaches a certain minimum threshold. The control unit, with its integrated sensors, detects this temperature and can decide to either limit or delay power reduction to prevent discomfort to the user.

In an embodiment, the heat pump system is provided, wherein the control unit is configured to limit or delay the reduction of the power of the compressor during a cycle of compressor oil return. The compressor oil return cycle is another critical phase where power reduction could be detrimental. Recognizing this, the control unit is designed to either limit or completely delay any power reduction during this cycle, ensuring that the compressor operates optimally.

In an embodiment, the heat pump system is provided wherein the electric nominal power consumption of the compressor is at least 800W. The heat pump system is designed to have an inverter compressor with a capacity of preferably more than 800W because devices having a lower power consumption will not have significant impact regarding electric grid stability and energy consumption reduction. Thus, the necessity of implementing a power modulation mechanism is less relevant.

In the figures, the subject-matter of the invention is schematically shown, wherein identical or similarly acting elements are usually provided with the same reference signs.
- Fig. 1A: shows a schematic representation of an installation according to an embodiment of the invention.
- Fig. 1B: shows a schematic representation of an installation according to an embodiment of the invention.
- Fig. 1C: shows a schematic representation of an installation according to an embodiment of the invention.
- Fig. 2: shows a graphical representation of the power reduction and deviation as a function of time.
- Fig. 3A: shows a graphical representation of the power reduction as a function of the frequency deviation.
- Fig. 3B: shows a graphical representation of the power reduction as a function of the voltage deviation.
- Fig. 4: shows a schematic representation of a control logic according to an embodiment of the invention.

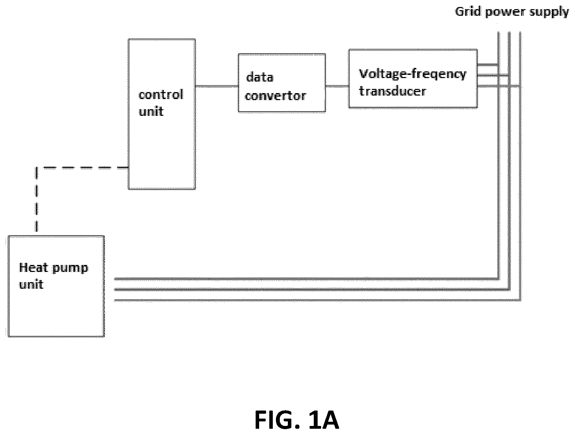

Figure 1A shows a schematic representation of a heat pump system comprising a heat pump unit connected to a grid power supply. A control unit is connected to the heat pump unit and is also connected to the grid power supply via a data convertor and a voltage-frequency transducer. In the figure, the heat pump unit can be an outdoor heat pump unit, while the control unit can be part of the indoor heat pump unit. In this case, the indoor heat pump unit and the outdoor heat pump unit should be understood as the heat pump system. Alternatively, the heat pump system can be made of only one indoor heat pump unit.

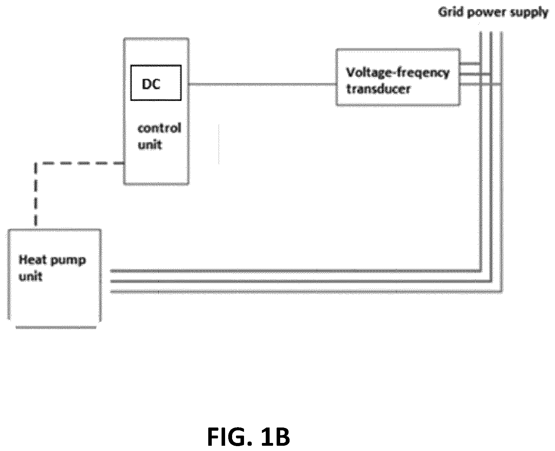

In Figure 1B, a similar representation is shown as in Figure 1A. However, in this figure the data convertor is integrated into the control unit. Thus there is no external data convertor required.

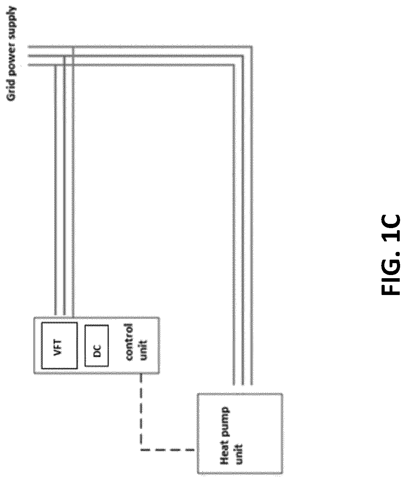

Figure 1C shows yet another representation similar to Figures 1A and 1B but with the voltage-frequency transducer also integrated into the control unit.

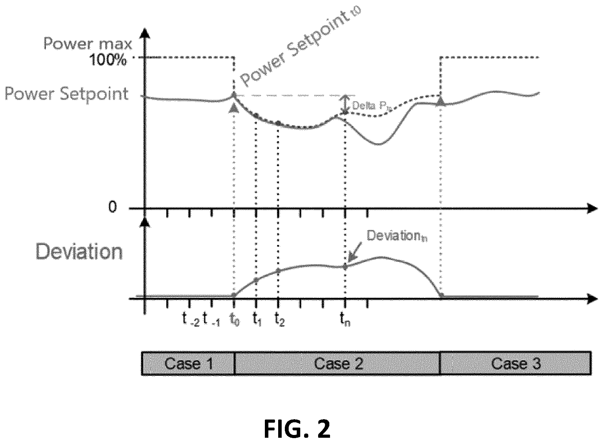

Figure 2 shows a graphical representation of the power reduction and deviation (i.e. the frequency and/or voltage deviation) as a function of time. The Power Setpoint is set within the following range: Power Setpoint ≤ Power max.

In case 1, there is no substantial deviation of the frequency and/or voltage, thus the Power Setpoint is not limited.

In case 2, the grid is overloaded, the frequency and/or voltage is decreasing compared to the nominal value (50Hz for the frequency and 230V for the voltage in Europe). "Deviation" signal represents the overload of the grid, i.e. Delta F and/or Delta V. The power of the heat pump must be proportionally lowered depending on the Deviation, such as Delta P = f(Delta P_{F}, Delta P_{V}) = f(g(Delta F), h(Delta η), wherein f(Delta P_{F}, Delta P_{V}) is any mathematical function combining the frequency and/or the voltage deviation compared to the nominal value, and wherein f is preferably equal to the maximum of (Delta P_{F}, Delta P_{V}), and wherein g and h are preferably affine, parabolic, or polynomial functions. Wherein: If Deviation > 0, then Power max n = Power setpoint t0 - Delta Pₜₙ, else Power max n = 100%.

In case 3, there is no more overload on the grid. The heat pump is allowed to work at its maximum capacity.

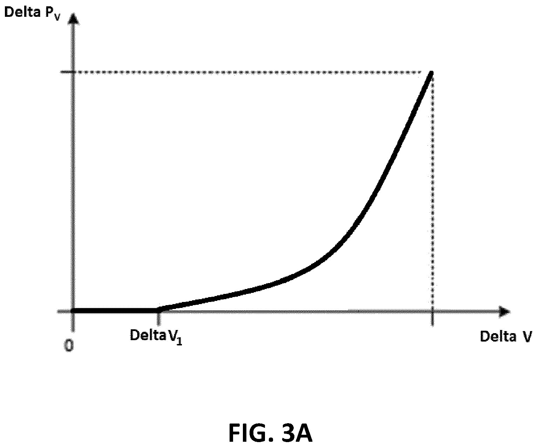

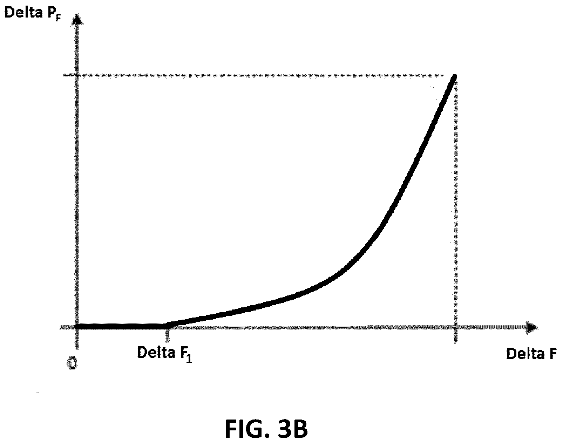

Figures 3A and 3B show a graphical representation of the power reduction as a function of the frequency or voltage deviation. It can be seen in figure 3A that above a specific value of frequency deviation, the power reduction starts. The value of Delta F1 is preferably equal to 0,2Hz. It can be seen in figure 3B that above a specific value of voltage deviation, the power reduction starts. The value of Delta V1 is preferably equal to 5% of the voltage nominal value. Thus, for the voltage nominal value of 230V in Europe, Delta V1 is preferably equal to 11,5V.

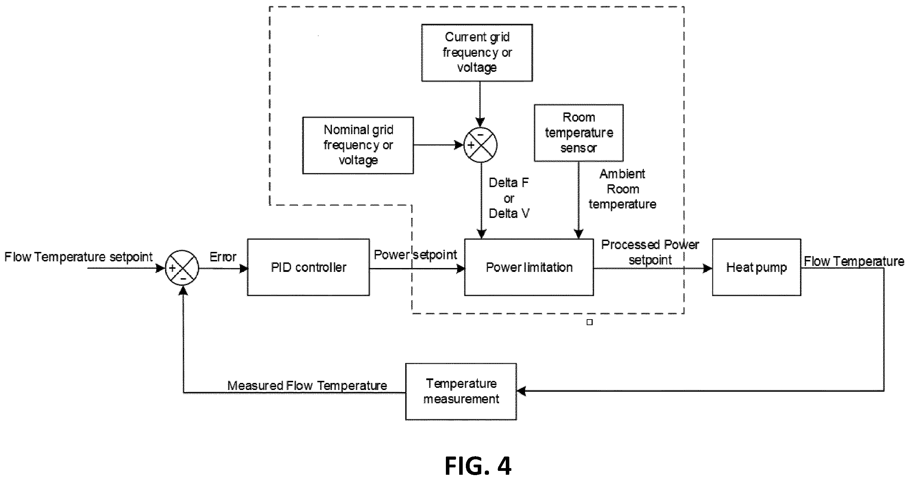

In Figure 4, a schematic representation of a control logic is shown wherein a power limitation function according to the described embodiments is positioned between a Proportional Integral Derivative (PID) controller and a heat pump. The reduction of the power of the compressor and/or the electrical backup heater based on the voltage and/or frequency deviation can be configured to limit or delay the power reduction depending on the room temperature, or if a cycle of compressor oil return or if a defrosting cycle is needed or is on-going (last both not illustrated in the figure 4).

## Claims

1. An electrically powered heat pump system, comprising:
- a variable speed compressor;
- a control unit configured to respond to power grid frequency and/or voltage deviations; and
- a power modulation mechanism configured to adjust the power of the compressor and/or an electrical backup heater, based on the deviations.

2. The heat pump system of claim 1, wherein the control unit is configured to measure and respond to grid frequency and/or voltage deviations.

3. The heat pump system of claim 1 or 2, wherein the power modulation mechanism is configured to proportionally reduce the power of the compressor and/or the electrical backup heater in response to the grid frequency and/or voltage deviations.

4. The heat pump system according to any of claims 1 to 3, wherein the power modulation mechanism is configured to reduce the power of the compressor and/or the electrical backup heater according to an affine function of the grid frequency and/or the grid voltage deviations.

5. The heat pump system according to any of claims 1 to 4, wherein the power modulation mechanism is configured to reduce the power of the compressor and/or the electrical backup heater according to a polynomial or parabolic function of the grid frequency and/or the grid voltage deviations.

6. The heat pump system according to any of claims 1 to 5, wherein the power modulation mechanism reduces the power of the compressor and/or the electrical backup heater according to the equation Delta P = f(Delta P_{F}, Delta Pv), or Delta P = Delta P_{F}, or Delta P = Delta Pv, where Delta P represents the power reduction, f represents a function, Delta P_{F} represents the power reduction resulting to the frequency deviation, and Delta Pv represents the power reduction resulting to the voltage deviation.

7. The heat pump system according to any of claims 1 to 6, wherein the power reduction resulting to the frequency deviation Delta P_{F} is given by the equation Delta P_{F}= g(Delta F) and the power reduction resulting to the voltage deviation Delta Pv is given by the equation Delta Pv= h(Delta V), g represents a function, h represents a function.

8. The heat pump system of claim 6 or 7, wherein the function f may be equal to the maximum of (Delta P_{F}, Delta P_{V}).

9. The heat pump system according to any of claims 6 to 8, wherein the function g and h may be an affine, parabolic or polynomial function.

10. The heat pump system according to any of claims 6 to 9, wherein the control unit is configured to initiate power reduction resulting to the frequency deviation Delta P_{F} in response to a grid frequency deviation that exceeds 0.01 Hz, preferably 0.2 Hz.

11. The heat pump system according to any of claims 6 to 10, wherein the control unit is configured to initiate power reduction resulting to the voltage deviation Delta Pv in response to a grid voltage deviation that exceeds 10V, preferably 11.5V.

12. The heat pump system of according to any of claims 1 to 11, wherein the control unit is configured to calculate the grid frequency deviation and/or grid voltage deviation using nominal and measured values of the grid frequency and/or grid voltage respectively.

13. The heat pump system according to any of claims 1 to 12, wherein the control unit is configured to limit or delay the reduction of the power of the compressor and/or the electrical backup heater in case of defrosting, or when a minimum threshold of ambient temperature, measured inside, is reached.

14. The heat pump system according to any of claims 1 to 13, wherein the control unit is configured to limit or delay the reduction of the power of the compressor during a cycle of compressor oil return.

15. The heat pump system according to any of claims 1 to 14, wherein the electric nominal power consumption of the compressor is at least 800W.
